**Europäisches Patentamt**

**European Patent Office**

**Office européen des brevets**

(19)

(11) Veröffentlichungsnummer: **0 095 008**
**B1**

(12) # EUROPÄISCHE PATENTSCHRIFT

(45) Veröffentlichungstag der Patentschrift:
**03.09.86**

(21) Anmeldenummer: **82710032.2**

(22) Anmeldetag: **22.05.82**

(51) Int. Cl.⁴: **B 29 C 49/56**

(54) Formschliesssystem für Kunststoff-Blasmaschinen.

(43) Veröffentlichungstag der Anmeldung:
**30.11.83 Patentblatt 83/48**

(45) Bekanntmachung des Hinweises auf die Patenterteilung:
**03.09.86 Patentblatt 86/36**

(84) Benannte Vertragsstaaten:
**AT BE CH DE FR GB IT LI LU NL SE**

(56) Entgegenhaltungen:
**DE-A-2 423 936**
**DE-A-2 853 577**
**DE-B-2 048 258**
**GB-A-1 064 268**
**GB-A-1 477 098**
**US-A-4 248 582**

(73) Patentinhaber: **BEKUM Maschinenfabriken GmbH, Lankwitzerstrasse 14/15, D-1000 Berlin 42 (DE)**

(72) Erfinder: **Heintzel, Erich, Finchleystrasse 2, D-1000 Berlin 49 (DE)**

(74) Vertreter: **Huss, Carl- Hans, Dipl.- Ing., Patentanwalt Griesstrasse 3 a Postfach 14 54, D-8100 Garmisch- Partenkirchen (DE)**

## Beschreibung

Die Erfindung geht aus von einer Vorrichtung gemäß der Us-A-42 48 582.

Die Anordnung von Holmen nur unterhalb der Formteile und die damit verbundene Führung und Kraftübertragung nur im unteren Teil der Schließplatten bewirkt durch den als Gegendruck auf den oberen Teil der Schließplatten einwirkenden Blasdruck des auszuformenden Hohlkörpers eine asymmetrische Kräfteverteilung, die bestrebt ist, unter Verbiegen der Führungsholme ein geringfügiges Öffnen des obersten Teiles der Blasform hervorzurufen, also insbesondere bei großen Blasformen einen unzulänglichen Formschluß zur Folge hat.

Dies ist insbesondere dann der Fall, wenn der den Formschluß bewirkende Schließmotor einerseits direkt auf eine auf den Holmen verschiebbare Schließplatte und andererseits gegenläufig auf ein Querhaupt einwirkt, wobei ein Ende der Holme mit dem Querhaupt, das andere mit der zweiten Schließplatte verbunden ist, also der Schließdruck auf dieser Schließplatte über die Holme übertragen wird.

Da bei diesen Maschinen das Blasen von oben erfolgt, wird dieses Aufklaffen der Form dann besonders begünstigt, wenn der Durchmesser des den Vorformling bildenden Schlauchabschnitts größer ist als der des Halsteiles der Form, so daß in diesem Bereich durch Schneidkanten abzutrennende Überquetschungen entstehen und noch mehr, wenn sog. Henkelflaschen hergestellt werden sollen, bei welchen ein Abfallteil im Henkelinneren entsteht, das einem exakten Formschluß entgegenwirkt.

Die Vorrichtung nach der US-A-4,248,562 weist ein Formschließsystem auf, bei dem vier unterhalb der Formteile angebrachte Holme spiegelsymmetrisch zu einer in Schließrichtung verlaufenden vertikalen Mittelebene, in der auch die Wirkungslinien des Schließmotors liegen, in mehreren horizontalen Ebenen angeordnet sind, wobei jedoch die auf den Holmen verschiebbare Schließplatte nur auf den oberen Holmen geführt ist, während die unteren Holme als Lager für Einrichtungen dienen, mit welchen das ganze Formschließsystem von einer Extruderstation in eine Blasstation übergeführt werden kann.

Ausgehend von diesem Stand der Technik liegt der Erfindung die Aufgabe zugrunde, ein derartiges Schließsystem dahingehend zu verbessern, daß der Schließdruck bei beiden Formteilen möglichst gleichmäßig ist und auch bei größeren Formen verhältnismäßig schwache Holme und Schließmotoren verwendet werden können.

Diese Aufgabe löst die Erfindung dadurch, daß alle Holme beide Schließplatten durchsetzen, wobei zwei in der oberen Horizontalebene, symmetrisch zur Vertikalebene und ein dritter längs der Schnittlinie der unteren Horizontalebene mit der Vertikalebene verlaufen und eine um eine horizontale Achse schwenkbare Verbindung zwischen einer der Schließplatten und dem zugehörigen Formteil bzw. den zugehörigen Formteilen vorgesehen ist.

> erdurch entsteht der vorteilhafte Effekt, daß der Holm in der unteren Horizontalebene quasi wie ein Gegenmoment dem Aufbiegen der auf den Holmen verschiebbaren Schließplatte durch die vor allem bei größeren Hohlkörpern beträchtlichen Kräfte, die sich aus dem Blasdruck ergeben, entgegenwirkt, so daß sowohl die Zahl der Holme als auch ihre Dimensionierung ebenso wie die des Schließmotors verkleinert werden können.

Die Erfindung ist im Folgenden unter Bezugnahme auf die Zeichnung näher erläutert. Es stellen dar:

Fig. 1 eine perspektivische Darstellung des geschlossenen Schließsystems;

Fig. 2 eine Seitenansicht des geöffneten Schließsystems nach Fig. 1;

Fig. 3 eine Vorderansicht des Schließsystems in Richtung III-III der Fig. 2 gesehen.

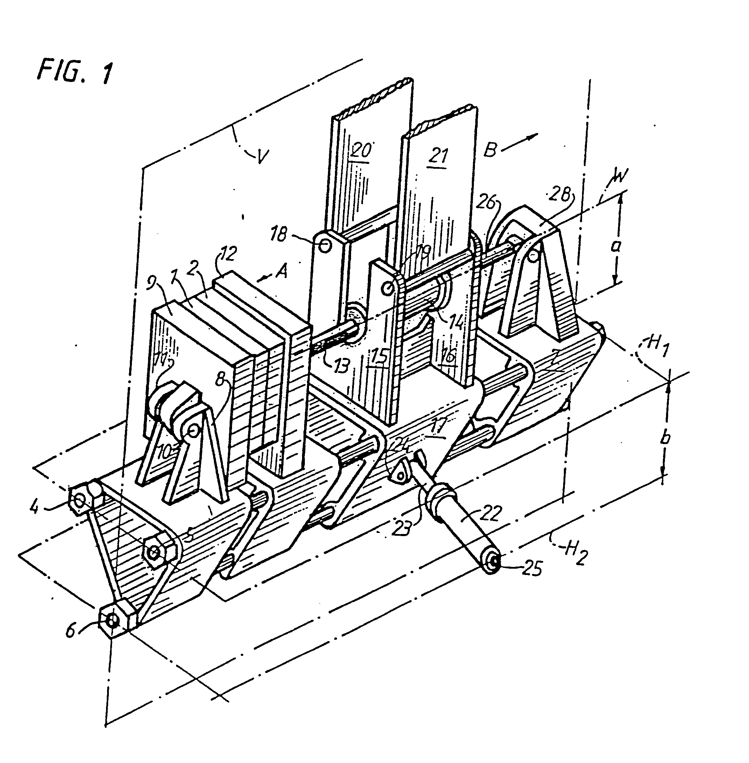

Bei dem Schließsystem gemäß den Fig. 1 bis 3 sind unterhalb der Formteile 1 und 2 drei Holme 4, 5 und 6 vorgesehen, deren eines Ende mit einem Querhaupt 7 und deren anderes Ende mit einer Schießplatte 8 verschraubt ist.

Das Formteil 1 ist über eine Formtragplatte 9, mit der es in bekannter Weise verschraubt ist, um eine horizontale Achse 10, die an der dem Formteil 1 abgewandten Rückseite der Schließplatte 8 in einem Lager 11 geführt ist, schwenkbar mit dieser verbunden.

Das zweite Formteil 2 ist direkt an einer zweiten Schließplatte 12 angeschraubt, die auf den Holmen 4, 3 und 6 verschiebbar geführt ist.

Etwa in der Mitte des Formteiles 2 greift an der zweiten Schließplatte 12 eine Kolbenstange 13 eines Schließmotors 14 an. Von den verschiedenen hierfür bekannten Systemen ist in der Zeichnung ein doppelt wirkender Hydraulikzylinder dargestellt, der von zwei Tragplatten 15 und 16 gehalten wird, die oben auf einen Führungsblock 17 aufgesetzt sind, in dem die Holme 4, 3, 6 verschiebbar sind. Die üblicherweise vorhandenen Gleichlaufeinrichtungen sind nicht dargestellt.

Oben an den Tragplatten 15 und 16 sind um horizontale Achsen 18 und 19 schwenkbare Schwingen 20 und 21 angebracht, deren nicht dargestellte Enden am Maschinenrahmen schwenkbar befestigt sind.

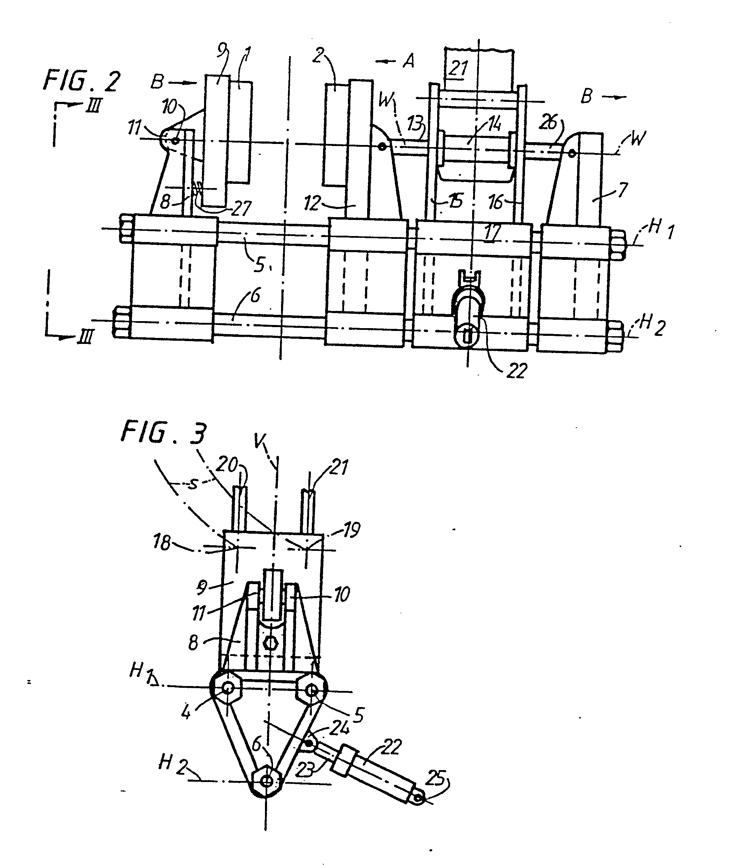

Mittels eines Hydraulikzylinders 22, dessen Kolbenstange 23 an einem seitlich am Führungsblock 17 angebrachten Lager 24 angreift, läßt sich das Ganze an den Schwingen 20 und 21 aufgehängte Schließsystem entlang der strichpunktiert dargestellten Bahnen S aus der in Fig. 3 dargestellten Stellung in eine hierzu seitlich und nach oben versetzte verschwenken, also beispielsweise von einer der dargestellten entsprechenden Blasstellung in eine Stellung unterhalb eines Extruders zur Aufnahme eines ausgepreasten schlauchförmigen Vorformlings.

Das Ende 25 des Hydraulikzylinders 22 ist am nicht dargestellten Maschinenrahmen schwenkbar befestigt.

Die zweite Kolbenstange 26 des Schließmotors 14 wirkt achsgleich aber gegenläufig zur ersten Kolbenstange 13 auf das Querhaupt 7 ein. Wenn also der Schließmotor 14 beaufschlagt wird, um die in Fig. 2 geöffnet gezeigten Formteile 1 und 2 zu schließen, wobei zwischen die Schließplatte 8 und die Formtragplatte 9 eine Feder 27 geschaltet sein kann, um das Formteil 1 bei geöffneter Form vertikal auszurichten, dann verschiebt die Kolbenstange 13 die Schließplatte 12 mit dem darauf befestigten Formteil 2 in Pfeilrichtung A und die Kolbenstange 26 das Querhaupt 7 in Pfeilrichtung B. Diese Bewegung wird aber über die Holme auf die Schließplatte 8 übertragen, so daß sich auch diese in Pfeilrichtung B bewegt.

Dadurch, daß die Holme 4, 5 und 6 spiegelsymmetrisch zu einer vertikalen Mittelebene V, in der auch die Wirkungslinie W liegt, in zwei Horizontalebenen $H_1$ und $H_2$ angeordnet sind, wird das Holmsystem bezüglich der Schließkräfte außerordentlich versteift, so daß selbst bei verhältnismäßig großen Formen keinerlei Überdimensionierung erforderlich ist, wenn ein sauberer Formschluß gewährleistet werden soll.

Der in der vertikalen Mittelebene V im Abstand a oberhalb der oberen Horizontalebene $H_1$ einwirkende Schließdruck des Schließmotors 14 hat nämlich nach Aufeinandertreffen der Formteile 1 und 2 das Bestreben, den oberen Teil 28 des Querhauptes 7 um eine in der Horizontalebene $H_1$ liegende Achse zu kippen, mit der Folge, daß die in dieser Horizontalebene liegenden Holme 4 und 5 auf Zug belastet werden, dagegen der in der unteren Horizontalebene $H_2$ verlaufende Holm 6 auf Druck.

Durch diese Kräfteverteilung wird aber ein Verbiegen der Holme durch den auf das Lager 11 einwirkenden, durch das Abquetschen von Material und den Blasdruck im Hohlkörper erzeugten, dem Schließdruck entgegenwirkenden Gegendruck vermieden.

Dies ist insbesonders dann der Fall, wenn der Abstand a der Wirkungslinie W von der oberen Horizontalebene $H_1$ etwa glewich dem Abstand b der Horizontalebenen voneinander ist.

Wegen dieses biegesteifen Systems und der aus geglichenen Druckverhältnisse ist es auch nicht mehr erforderlich, beide Formteile 1 und 2 gelenkig mit den zugehörigen Schließplatten zu verbinden, es reicht vielmehr aus, diese um eine horizontale Achse schwenkbare Verbindung nur bei einer, vorzugsweise der mit den Holmen verschraubten Schließplatte 8 vorzusehen. Bei kleinen Maschinen ist es sogar möglich, auf die Verschwankbarkeit ganz zu verzichten, und das Formteil 1 direkt mit der zugehörigen Schließplatte, die dann so ausgestaltet ist die dargestellte Schließplatte 12 zu verbinden.

Die beschriebene Dreiholmausführun eignet sich auch für größere Maschinen mit schwereren Formen und ist vor allem dann zweckmäßig, wenn die bereits erwähnten Henkelflaschen hergestellt werden sollen, weil der Abstand zwischen den beiden oberen Holmen auch eine Versteifung des Systems in Querrichtung bewirkt, so daß auch ein seitliches Aufklaffen der Form wirksam verhindert wird.

Dabei besteht sogar die Möglichkeit, in dieser Querrichtung unterschiedliche Schließdrucke zu erzeugen, also z.B. den Schließdruck an der Seite der Form an der der Henkel ausgeformt und Abfallmaterial abgetrennt werden muß, zu verstärken, indem man den entsprechenden oberen Holm auf dieser Seite geringfügig verkürzt (um Zehntelmillimeter) und so die Schließplatte 8 in Querrichtung etwas "schrägstellt" was ein Voreilen der zugehörigen Seite der Form 1 zur Folge hat. Diese Verkürzung eines der oberen Holme 4 oder 5 kann durch entsprechende Einstellung der Verschraubung der Schließplatte 8 mit den Holmen 4 bzw. 5 erreicht werden.

### Bezugszeichenaufstellung

1 Formteil
2 Formteil
4 Holm
5 Holm
6 Holm
7 Querhaupt
8 Schließplatte
9 Formtragplatte
10 horizontale Achse
11 Lager
12 Schließplatte
13 Kolbenstange
14 Schließmotor
15 Tragplatte
16 Tragplatte
17 Führungsblock
18 horizontale Achse
19 horizontale Achse
20 Schwinge
21 Schwinge
22 Hydraulikzylinder
23 Kolbenstange von 22
24 Läger an 17
25 Ende von 22
26 Kolbenstange von 14
27 Feder zwischen 8 und 9
28 oberer Teil von 7
V vertikale Mittelebene $>>_1$ obere Horizontalebene $>>_2$ untere Horizontalebene
W Wirkungslinie von 14
S Bewegungsbahnen von 18 und 19
a Abstand W von $H_1$
b Abstand zwischen $H_1$ und $H_2$

## Patentansprüche

1. Formschließsystem für Blasformmaschinen zur Herstellung von Hohlkörpern aus thermoplastischen Kunststoffen mit mehreren Holmen (4, 5, 6), die unterhalb der Formteile (1, 2) in mehreren horizontalen Ebenen ($H_1$, $H_2$) angeordnet sind, spiegelsymmetrisch zu einer in Schließrichtung verlaufenden vertikalen Mittelebene (V), in der auch die Wirkungslinien (W) eines Schließmotors (14) liegen, der einerseits direkt auf eine auf den Holmen verschiebbare Schließplatte (12) und andererseits gegenläufig auf ein Querhaupt (7) einwirkt, wobei ein Ende der Holme mit dem Querhaupt, das andere mit einer zweiten Schließplatte (8) verbunden ist, dadurch gekennzeichnet, daß alle Holme (4, 5, 6) beide Schließplatten (8,12) durchsetzen, wobei zwei (4, 5) in der oberen Horizontalebene ($H_1$) symmetrisch zur Vertikelebene (V) und ein dritter (6) längs der Schnittlinie der unteren Horizontalebene ($H_2$) mit der Vertikalebene (V) verlaufen und eine um eine horizontale Achse (10) schwenkbare Verbindung zwischen einer der Schließplatten (8) und dem zugehörigen Formteil (1) bzw. den zugehörigen Formteilen vorgesehen ist.

2. Formschließsystem nach Anspruch 1, dadurch gekennzeichnet, daß einer der oberen Holme (4 bzw. 5) geringfügig länger ist als der zweite.

3. Formschließsystem nach Anspruch 1, dadurch gekennzeichnet, daß der vertikale Abstand (a) der Wirkungslinien (W) des Schließmotors (14) von der oberen Horizontalebene ($H_1$) etwa gleich dem Abstand (b) der Horizontalebenen ($H_1$, $H_2$) voneinander ist.

## Claims

1. Mold closing system for blow molding machines for the manufacture of hollow articles from thermoplastic synthetic material having a plurality of tie-rods (4, 5, 6) provided in several horizontal planes ($H_1$, $H_2$) beneath the mold sections and further provided symmetrically to a vertical center plane (V) extending in the closing direction of the mold in which plane also lie the lines of influence (W) of a closing motor (14) which on one hand moves one closing platen (12) slideable on the rods and on the other hand in opposite direction a tie-bar (7), one end of the rods being connected with the tie-bar and the other ends with a second closing platen (8) characterized in that all rods (4, 5, 6) penetrate both closing platens (8, 12) whereby two rods (4, 5) are extending in the upper horizontal plane ($H_1$) symmetrically to the vertical plane (V) and a third-rod (6) is extending along the plane of intersection of the lower horizontal plane ($H_2$) with the vertical plane (V) and that a pivotable connection between one of the closing platens (8) and the respective mold section (1) or mold sections respectively about a horizontal axis (10) is provided.

2. Mold closing system according to claim 1 characterized in that one of the upper tie-rods (4 or 5) is slightly longer than the other tie-rod.

3. Mold closing system according to claim 1, characterized in that the vertical distance (a) of the lines of influence (W) of the closing motor (14) from the upper horizontal plane ($H_1$) is abou equal to the distance (b) separating the horizontal planes ($H_1$, $H_2$).

## Revendications

1. Système de fermeture de moule pour des machines de soufflage pour la fabrication de corps creux en matières thermoplastiques, comprenant plusieurs colonnes (4, 5, 6) qui sont disposées en dessous des parties de moule (1, 2) dans plusieurs plans horizontaux ($H_1$, $H_2$), symétriquement par rapport à un plan médian vertical (V) qui s'étend dans la direction de fermeture et dans lequel sont situées également les lignes d'action (W) d'un moteur de fermeture (14) agissant d'une part directement sur un plateau de fermeture (12) monté coulissant sur les colonnes et d'autre part en sens opposé sur un sommier (7), une extrémité des colonnes étant reliée au sommier et l'autre à un second plateau de fermeture (8), caractérisé par le fait que toutes les colonnes (4, 5, 6) traversent les deux plateaux de fermeture (8, 12), deux (4, 5) des colonnes s'étendant dans le plan horizontal supérieur ($H_1$) symetriquement au plan vertical (V) et une troisième (6) s'étendant le long de la ligne d'intersection du plan horizontal inférieur ($H_2$) avec le plan vertical (V), et une liaison permettant un pivotement autour d'un axe horizontal (10) étant prévue entre l'un des plateaux de fermeture (8) et la partie de moule correspondante (1) ou les parties de moule correspondantes.

2. Système de fermeture de moule suivant la revendication 1, caractérisé par le fait que l'une des colonnes supérieure (4 ou 5) est légèrement plus longue que la seconde.

3. Système de fermeture de moule suivant la revendication 1, caractérisé par le fait que la distance verticale (a) des lignes d'action (W) du moteur de fermeture (14) par rapport au plan horizontal supérieur ($H_1$) est sensiblement égal à la distance réciproque (b) des plans horizontaux ($H_1$, $H_2$).

# FIG. 1

FIG. 2

FIG. 3